# EUROPÄISCHE PATENTSCHRIFT

(11) **EP 1 107 341 B1**
(45) Veröffentlichungstag und Bekanntmachung des Hinweises auf die Patenterteilung: **09.07.2008**
(21) Anmeldenummer: 00250377.9
(22) Anmeldetag: 13.11.2000
(51) Int. Cl.: H01M 8/06, H01M 8/04

(54) **Brennstoffzellensystem mit einer Vorrichtung zum Zuleiten von Brennstoff**
Fuel cell system with a device for supplying fuel
Système de piles à combustible avec un dispositif pour alimenter en combustible

(30) Priorität: 30.11.1999 DE 19958829
(43) Veröffentlichungstag der Anmeldung: 13.06.2001
(73) Patentinhaber: P21 - Power for the 21st Century GmbH, 85649 Brunnthal (DE)
(72) Erfinder: Herdeg, Wolfgang, Dr. rer.nat., 72141 Walddorfhäslach (DE); Klos, Holger, Dr., 81541 München (DE); Sattler, Martin, Dipl.-Ing., 97486 Königsberg (DE); Reichenbach, Franz, Dipl.-Ing., 6118 Bad Vilbel (CH); Hess, Sabine, 80469 München (DE); Wilhelm, Hans-Dieter, Dipl.-Ing., 64295 Darmstadt (DE); Eck, Karl, Dip.-Ing., 60318 Frankfurt (DE); Zapp, Thomas, Dr.-Ing., 44265 Dortmund (DE)
(74) Vertreter: Müller, Thomas

(56) Entgegenhaltungen:
- EP-A- 0 693 793
- EP-A- 0 778 631
- WO-A-99/27590
- DE-A1- 19 823 499
- GB-A- 1 136 389
- US-A- 3 704 965

## Beschreibung

Die vorliegende Erfindung betrifft ein Brennstoffzellensystem mit einer Vorrichtung zum Zuleiten von Brennstoff gemäß dem Gattungsbegriff des Patentanspruchs 1.

Brennstoffzellen sind bereits seit langem bekannt und haben insbesondere im Bereich der Automobilindustrie in den letzten Jahren erheblich an Bedeutung gewonnen.

In einer Brennstoffzelle wird durch eine chemische Reaktion Strom erzeugt. Dabei wird ein Brennstoff und ein Oxidationsmittel in elektrische Energie und Wasser als Reaktionsprodukte umgewandelt. Eine Brennstoffzelle besteht im wesentlichen aus einem Anodenteil, einer Membran und einem Kathodenteil. Die Membran besteht aus einem gasdichten und protonenleitenden Material und ist zwischen der Anode und der Kathode angeordnet, um lonen auszutauschen. Auf der Seite der Anode wird der Brennstoff zugeführt, während auf der Seite der Kathode das Oxidationsmittel zugeführt wird. An der Anode werden durch katalytische Reaktionen Protonen beziehungsweise Wasserstoffionen erzeugt, die sich durch die Membran zur Kathode bewegen. An der Kathode reagieren die Wasserstoffionen mit dem Sauerstoff, und es bildet sich Wasser. Die bei der Reaktion abgegebenen Elektronen lassen sich als elektrischer Strom durch einen Verbraucher leiten, beispielsweise den Elektromotor eines Automobils.

Als gasförmige Reaktionspartner für die Brennstoffzelle werden beispielsweise Wasserstoff als Brennstoff und Sauerstoff oder Luft als Oxidationsmittel verwendet.

Will man die Brennstoffzelle mit einem leicht verfügbaren oder zu speichernden Energieträger wie Erdgas, Methanol oder dergleichen betreiben, muss man diese Kohlenwasserstoffe im allgemeinen zuerst noch in einer entsprechenden Vorrichtung zum Erzeugen/Aufbereiten eines Brennstoffs für eine Brennstoffzelle zunächst in ein wasserstoffreiches Gas umwandeln, wie dies beispielsweise aus der DE 198 23 499 A1 bekannt ist. Es gibt aber auch bereits Brennstoffzellen, die eine solche vorherige Umwandlung nicht benötigen. So offenbart etwa die EP 0 778 631 A1 eine Brennstoffzelle, die mit einem Methanol/Wassergemisch als Brennstoff betrieben wird. In der EP 0 693 793 A2 sind ein Verfahren und eine Vorrichtung zum dosierten Zuführen von Methanol und/oder Wasser aus einem Vorratsbehälter über eine Förderleitung zu einem Brennstoffzellensystem beschrieben, wobei in der Förderleitung ein Dosierventil vorgesehen ist. Mit Hilfe einer Förderpumpe wird ein konstanter Massenstrom aus dem Vorratsbehälter in die Förderleitung gefördert. Dabei sind zwei getrennte Pumpen vorgesehen, wobei eine Förderpumpe in in der Förderleitung für das Wasser, und eine Förderpumpe in der Zuleitung für das Methanol vorgesehen.

Üblicherweise wird der Brennstoff beziehungsweise das Ausgangsmaterial für den Brennstoff nicht in Reinform, sondern als Kraftstoff/Wassergemisch in die Vorrichtung zum Erzeugen/Aufbereiten des Brennstoffs oder die Brennstoffzelle eingeleitet. Aus diesem Grund muss der Kraftstoff beziehungsweise das Ausgangsmaterial für den Brennstoff zunächst mit einer geeigneten Menge an Wasser vermischt werden.

In der WO 99/27590 A1 ist eine Brennstoffzellenanordnung mit verbesserter Wasser-Handhabungskapazität beschrieben. Ein Brennstoff/Wassergemisch wird vor Eintritt in die Brennstoffzellen in einem Tank dahingehend bearbeitet, dass enthaltenes Kohlendioxid extrahiert wird. Das kohlendioxidreduzierte Resultat dieses Extrahierungsvorgangs wird über eine Pumpe den Brennstoffzellen zugeführt, wobei die Pumpe zwischen dem Tank und den Brennstoffzellen angeordnet ist. Bei dieser bekannten Lösung wird das Brennstoff/Wassergemisch in dem Tank gereinigt, indem Kohlenstoff extrahiert wird.

Zur Förderung von flüssigen Medien sind seit vielen Jahren so genannte Doppelpumpen bekannt, die jeweils zwei separate Pumpen innerhalb eines gemeinsamen Gehäuses umfassen und die meistens über einen gemeinsamen Antrieb angetrieben werden. So offenbart die DE 298 18 704 U1 eine Doppelpumpe, die beispielsweise zur Förderung von zwei verschiedenen Kühlströmen in einem Kühlsystem eingesetzt wird. Aus der DE 197 10 675 A1 ist eine Doppelpumpe bekannt, die insbesondere zur Förderung von Heizungswasser vorgesehen ist und zwei Pumpen umfasst, die auf deutlich unterschiedlich große Förderströme ausgelegt und durch eine Pumpensteuerung wahlweise einzeln oder gemeinsam drehzahlgeregelt über einen großen Bereich der Gesamtfördermenge betreibbar sind. Weiterhin ist aus der DE 195 36 997 C1 eine in Axialkolbenpumpen-Bauweise ausgeführte Doppelpumpe bekannt, die für beide Pumpen eine gemeinsame Ansaugleitung vorsieht, in der eine Kreiselpumpe zur Schaffung eines geeigneten Vordrucks für die beiden Pumpen der Doppelpumpe angeordnet ist. Ferner ist aus der DE 30 41 832 A1 eine Axialkolben-Doppelpumpe für eine Hochleistungshydraulik bekannt. Schließlich befasst sich die DE 35 44 016 C2 mit einer als Doppelpumpe ausgebildeten Pumpenanordnung zur dosierten Abgabe von mindestens 2 Komponenten mit einem einstellbaren Mischungsverhältnis. Hierzu sind die beiden Pumpen der Doppelpumpe jeweils mit einer Hubvolumen-Verstellvorrichtung versehen, wobei beide Verstellvorrichtungen zur gemeinsamen symmetrischen Verstellung miteinander in Verbindung stehen.

Der vorliegenden Erfindung liegt die Aufgabe zugrunde, ein Brennstoffzellensystem der gattungsgemäßen Art dahingehend zu verbessern, dass auf möglichst einfache und kostengünstige Weise ein erforderliches Kraftstoff/Wassergemisch hergestellt und in die Vorrichtung zum Erzeugen/Aufbereiten des Brennstoffs oder direkt in die Brennstoffzelle eingeleitet werden kann.

Diese Aufgabe wird gemäß der Erfindung durch ein Brennstoffzellensystem mit einer Brennstoffzelle, die einen Anodenteil mit einer Zuleitung und einer Ableitung für einen Brennstoff und einen Kathodenteil mit einer Zuleitung und einer Ableitung für ein Oxidationsmittel aufweist, und mit einer Vorrichtung zur Zuleitung des Brennstoffs zur Brennstoffzelle entweder direkt oder über eine Vorrichtung zum Erzeugen/Aufbereiten des Brennstoffs, die ausgangsseitig mit der Brennstoffzuleitung und eingangsseitig mit der Vorrichtung zum Zuleiten von Brennstoff verbunden ist, dadurch gelöst, dass die Vorrichtung zur Zuleitung von Brennstoff einen Kraftstofftank aufweist, aus dem eine Kraftstoffzuleitung herausführt. Weiterhin ist eine Doppelpumpe vorgesehen, die ebenfalls in der Kraftstoffzuleitung angeordnet ist und die weiterhin mit einer Wasserzuleitung verbunden ist. Schließlich ist noch ein Zwischentank zum Zwischenspeichem des Kraftstoff/Wassergemischs vorgesehen, der in Strömungsrichtung hinter der Doppelpumpe ebenfalls in der Kraftstoffleitung angeordnet ist.

Durch die erfindungsgemäße Vorrichtung wird es auf einfache und kostengünstige Weise möglich, ein erforderliches Kraftstoff/Wassergemisch herzustellen und der Vorrichtung zum Erzeugen/Aufbereiten des Brennstoffs oder direkt der Brennstoffzelle zur Verfügung zu stellen.

Dabei ist das Ausgangsmaterial für den Brennstoff der Brennstoffzelle als Kraftstoff zunächst im Kraftstofftank gespeichert. Wenn als Brennstoff für die Brennstoffzelle Wasserstoff verwendet wird, kann es sich bei dem Kraftstoff beispielsweise um Methanol, Methan, Benzin, Erdgas, Kohlegas, Biogas oder dergleichen handeln.

Der Kraftstoff wird über die Kraftstoffzuleitung in die Doppelpumpe eingespeist. Die Doppelpumpe ist weiterhin mit einer entsprechenden Wasserzuleitung verbunden. Eine solche Doppelpumpe hat den Effekt, dass der aus dem Kraftstofftank herausgepumpte Kraftstoff, der als Ausgangsmaterial für den Brennstoff dient, vor Eintritt in die Vorrichtung zum Erzeugen/Aufbereiten des Brennstoffs oder in die Brennstoffzelle mit dem Wasser zunächst zu einen Kraftstoff/Wassergemisch vermischt wird.

Dieses in der Doppelpumpe erzeugte Gemisch wird dann in einem Zwischentank zwischengespeichert, bevor es in die Vorrichtung zum Erzeugen/Aufbereiten des Brennstoffs oder in die Brennstoffzelle eingespeist wird.

Der Zwischentank dient als Pufferspeicher, so dass zum Betrieb der Vorrichtung zum Erzeugen/Aufbereiten des Brennstoffs oder zum Betrieb der Brennstoffzelle immer eine genügend große Menge an Kraftstoff/Wassergemisch zur Verfügung steht. Das Vorhandensein einer genügend großen Menge an Kraftstoff/Wassergemisch ist insbesondere in der Startphase beziehungsweise Hochfahrphase des Brennstoffzellensystems von Bedeutung. Während der Startphase des Brennstoffzellensystems - insbesondere während eines Kaltstarts -ist es erforderlich, das Kraftstoff/Wassergemisch möglichst schnell in die Vorrichtung zum Erzeugen/Aufbereiten des Brennstoffs oder in die Brennstoffzelle einzuleiten, damit die Brennstoffzelle möglichst rasch ihre optimale Leistungsfähigkeit erreicht. Durch die Verwendung eines Zwischentanks in der Kraftstoffzuleitung wird erreicht, dass immer-insbesondere auch nach dem Abschalten der Brennstoffzelle - eine genügend große Menge an Kraftstoff/Wassergemisch im Brennstoffzellensystem verbleibt, so dass bei einem erneuten Start des Brennstoffzellensystems das Kraftstoff/Wassergemisch nicht erst erzeugt werden muss, sondern gleich zur Verfügung steht.

Vorteilhaft wird für die Doppelpumpe solches Wasser verwendet, das während des Brennstoffzellenprozesses aus der Brennstoffzelle ausgetragen und aus deren Abgasströmen zurückgewonnen wird. Diese Lösung wird im weiteren Verlauf der Beschreibung näher erläutert, ohne dass die Erfindung auf diese eine Lösung beschränkt sein soll. Das der Doppelpumpe über die Wasserzuleitung zugeleitete Wasser kann aber auch aus einer externen Wasserquelle zugeleitet werden.

Durch die erfindungsgemäße Vorrichtung zum Zuleiten von Brennstoff wird es auf einfache Weise möglich, einen Kraftstoff vor dessen weiterer Verwertung im Sinne eines Zwischenproduktes aufzubereiten, indem Prozesswasser bereits am Anfang der Prozesskette zugemischt wird, um das entsprechende Kraftstoff/Wassergemisch zu erzeugen.

Vorteilhafte Ausführungsformen der erfindungsgemäßen Vorrichtung ergeben sich aus den Unteransprüchen.

Vorteilhaft kann in der Kraftstoffzuleitung in Strömungsrichtung des Kraftstoffs vor der Doppelpumpe eine weitere Pumpe vorgesehen sein. Über diese Pumpe, die beispielsweise als Kraftstoffpumpe ausgebildet ist, wird der Kraftstoff beziehungsweise das Ausgangsmaterial für den Brennstoff aus dem Kraftstofftank herausgepumpt und in die Doppelpumpe hineingeleitet. Bei einer entsprechend leistungsfähigen Doppelpumpe kann diese Funktion auch von der Doppelpumpe übernommen werden.

Während der Startphase des Brennstoffzellensystems wird die Doppelpumpe und/oder die weitere Pumpe vorteilhaft über eine von der Brennstoffzelle unabhängige elektrische Leistungsquelle, vorzugsweise eine aufladbare Batterie, betrieben.

Vorzugsweise kann der Zwischentank in oder an dem Kraftstofftank angeordnet sein. Auf diese Weise lässt sich eine sehr platzsparende Bauweise realisieren, was insbesondere bei Verwendung der Vorrichtung in einem Fahrzeug von Vorteil ist, da dort üblicherweise nur ein sehr begrenzter Bauraum zur Verfügung steht.

In weiterer Ausgestaltung kann in der Wasserzuleitung ein Wassertank vorgesehen sein.

Ein solcher Wassertank ist beispielsweise dann von Vorteil, wenn zum Herstellen des Kraftstoff/Wassergemischs solches Wasser verwendet wird, das während des Brennstoffzellenprozesses aus der Brennstoffzelle ausgetragen und aus den Abgasströmen der Brennstoffzelle zurückgewonnen wird. Dieses Prozesswasser wird über die Wasserzuleitung in die Doppelpumpe hineingeleitet, wo es mit dem Ausgangsmaterial für den Brennstoff vermischt wird.

Derartiges Prozesswasser wird aber nur während des Betriebs der Brennstoffzelle erzeugt, so dass es insbesondere in der Startphase des Brennstoffzellensystems noch nicht zur Verfügung steht. Aus diesem Grund dient der Wassertank als entsprechendes Wasserreservoir, aus dem Wasser insbesondere während der Startphase des Brennstoffzellensystems entnommen werden kann, um möglichst schnell das erforderliche Kraftstoff/Wassergemisch zur Verfügung stellen zu können.

Allerdings kann es auch sinnvoll sein, auf einen solchen Wassertank zu verzichten und die Zuführung an Wasser in die Doppelpumpe allein über eine entsprechende Dimensionierung der Wasserzuleitung zu realisieren. Insbesondere dann, wenn die Vorrichtung zum Zuleiten von Brennstoff in eine Brennstoffzelle in Umgebungen mit sehr niedrigen Temperaturen, das heißt mit Temperaturen unterhalb des Gefrierpunkts, verwendet wird, besteht die Gefahr, dass in einem Wassertank befindliches Wasser einfrieren kann. In einem solchen Fall müsste das eingefrorene Wasser zunächst aufgetaut werden, was relativ zeitaufwendig ist. Wenn ein mit einer solchen Vorrichtung zum Zuleiten von Brennstoff versehenes Brennstoffzellensystem im Umfeld sehr niedriger Temperaturen verwendet wird, sollte daher möglichst kein separater Wassertank verwendet werden.

Um in einem solchen Fall dennoch eine ausreichende Menge an Kraftstoff/Wassergemisch bereits während der Startphase eines Brennstoffzellensystems bereitstellen zu können, muss der so dimensioniert sein, dass er soviel Kraftstoff/Wassergemisch aufnehmen kann, dass das Brennstoffzellensystem mit dieser gespeicherten Menge solange betrieben werden kann, bis durch den Brennstoffzellenprozess genügend Prozesswasser für den weiteren Betrieb produziert wird.

Wenn in der Wasserzuleitung dennoch ein Wassertank verwendet wird, kann dem Problem des möglichen Einfrierens von im Wassertank befindlichem Wasser beispielsweise dadurch entgegengetreten werden, dass der Wassertank im Stillstand grundsätzlich geleert wird und nur während des Betriebs des Brennstoffzellensystems gefüllt wird. Das bedeutet, dass der Wassertank insbesondere in den Zeiträumen nach dem Abschalten des Brennstoffzellensystems und auch noch während der Startphase des Brennstoffzellensystems leer ist. Dadurch kann es nicht mehr zu einem Einfrieren von Wasser im Wassertank kommen. In anderer Ausgestaltung der Erfindung ist es denkbar, den Wassertank in Form eines dehnbaren Gefäßes auszubilden. Sollte im Wassertank befindliches Wasser gefrieren und sich dadurch ausdehnen, kann durch die Dehnbarkeit des Wassertanks dessen Beschädigung verhindert werden.

Vorzugsweise ist die Wasserzuleitung und/oder der Wassertank mit einem Ablassventil verbunden. Über das Ablassventil kann das Prozesswasser abgelassen werden, wenn etwa der Zwischentank voll ist. Weiterhin ist es möglich, dass zur Vermeidung eines Einfrierens das Wasser aus der Wasserzuleitung und/oder dem Wassertank abgeleitet wird, wenn das Brennstoffzellensystem längere Zeit oder bei tiefen Temperaturen abgeschaltet wird.

In weiterer Ausgestaltung kann in Strömungsrichtung nach dem Zwischentank eine weitere Pumpe vorgesehen sein. Über diese Pumpe wird sichergestellt, dass das Kraftstoff/Wassergemisch mit dem erforderlichen Druck in die Vorrichtung zum Erzeugen/ Aufbereiten des Brennstoffs oder die Brennstoffzelle eingeleitet wird. Beispielsweise ist es denkbar, eine solche Pumpe dann zu verwenden, wenn das Kraftstoff/Wassergemisch nach dem Austritt aus dem Zwischentank nur einen Druck von ≤ 1 bar aufweist. Wenn hingegen der Druck nach dem Zwischentank beispielsweise bereits 1 bar oder mehr beträgt ist eine solche Pumpe in der Regel nicht erforderlich. In diesem Fall kann die Pumpe an sich abgeschaltet bleiben und muss nur in Notfällen aktiviert werden. Dazu kann eine die Pumpe umgehende Bypassleitung vorgesehen sein, über die das Kraftstoff/Wassergemisch bei genügend hohem Druck an der Pumpe vorbei geleitet wird. Bei Abfall des Drucks unter einen bestimmten Grenzwert kann dann das Gemisch durch Stellung eines entsprechenden Ventils über die Pumpe geleitet werden.

In einem erfindungsgemäßen Brennstoffzellensystem wird es auf einfache und kostengünstige Weise möglich, einer Vorrichtung zum Erzeugen/Aufbereiten des Brennstoffs immer eine ausreichende Menge an Kraftstoff/Wassergemisch zur Verfügung zu stellen.

In der Vorrichtung zum Zuleiten von Brennstoff wird zunächst das Kraftstoff/Wassergemisch in dem erforderlichen Mischungsverhältnis hergestellt. Anschließend wird dieses Kraftstoff/Wassergemisch in die Vorrichtung zum Erzeugen/Aufbereiten des Brennstoffs eingeleitet, wo es in ein wasserstoffreiches Gas umgewandelt wird. Danach wird dieses wasserstoffreiche Gas über die Brennstoffzuleitung in die Brennstoffzelle eingeleitet.

Üblicherweise weist die Vorrichtung zum Erzeugen/Aufbereiten des Brennstoffs eine Anzahl von Reaktorelementen auf, die über entsprechende Leitungen miteinander verbunden sind, so dass der Brennstoff während seiner Erzeugung, beziehungsweise Aufbereitung, die einzelnen Reaktorelemente durchströmt.

In einigen der Reaktorelemente wird Wärme benötigt. Eines dieser Reaktorelemente ist beispielsweise ein Verdampfer. Ein solcher Verdampfer ist etwa erforderlich, wenn Wasserstoff aus Methanol oder dergleichen reformiert werden soll. Bei einem anderen Reaktorelement handelt es sich um einen Reformer, der dem Verdampfer nachgeschaltet ist, und in dem das Kraftstoff/Wassergemisch zu einem wasserstoffreichen Gas reformiert wird.

In anderen Reaktorelementen wird hingegen Wärme frei. Diese Reaktorelemente können beispielsweise als selektive Oxidation ausgebildet sein. Dieses Reaktorelement ist erforderlich, wenn der Wasserstoff durch das Verfahren der partiellen Oxidation hergestellt wird. Hierbei wird das Gas zur Entfernung von CO durch eine homogene Wassergasreaktion zunächst in einem Shift-Reaktor gereinigt und in der nachfolgenden Stufe - der selektiven Oxidation - feingereinigt.

Vorzugsweise kann in der Brennstoffableitung und/oder der Oxidationsmittelableitung der Brennstoffzelle ein Wasserabscheider vorgesehen sein, der insbesondere mit der Wasserzuleitung zur Doppelpumpe verbunden ist. Über diesen Wasserabscheider kann das während des Brennstoffzellenprozesses produzierte Prozesswasser gesammelt und anschließend weiter verwertet werden. Während des Betriebs der Brennstoffzelle wird nämlich neben Wärme unter anderem auch Wasser produziert, das in Form von Wasserdampf im Abgasstrom des Oxidationsmittels und/oder des Brennstoffs abgeleitet wird. Um den Wasserdampf in den flüssigen Zustand zu überführen, damit es für andere Prozesse, beispielsweise die Prozesswasserzumischung am Anfang der Prozesskette, verfügbar ist, durchströmt der den Wasserdampf enthaltende Gasstrom nach dem Austritt aus der Brennstoffzelle den Wasserabscheider, in dem der Wasserdampf zu flüssigem Wasser kondensiert. Dieses Wasser wird vorzugsweise über die Wasserzuleitung zur Doppelpumpe geleitet und dort zur Herstellung des Kraftstoff/Wassergemischs verwendet

Vorzugsweise kann ein wie vorstehend beschriebenes erfindungsgemäßes Brennstoffzellensystem in einem oder für ein Fahrzeug, insbesondere als Stromquelle für ein Elektrofahrzeug verwendet werden. Auf Grund der rasanten Entwicklung der Brennstoffzellentechnologie im Fahrzeugsektor bietet eine solche Verwendung besonders gute Einsatzmöglichkeiten. Dennoch sind auch andere Einsatzmöglichkeiten denkbar. Zu nennen sind hier unter anderem Brennstoffzellen für mobile Geräte wie Computer oder dergleichen bis hin zu stationären Einrichtungen wie Kraftwerksanlagen. Hier eignet sich die Brennstoffzellentechnik besonders für die dezentrale Energieversorgung von Häusern, Industrieanlagen oder dergleichen.

In bevorzugter Weise wird die vorliegende Erfindung in Verbindung mit Brennstoffzellen mit Polymermembran (PEM) verwendet. Diese Brennstoffzellen haben einen hohen elektrischen Wirkungsgrad, verursachen nur minimale Emissionen, weisen ein optimales Teillastverhalten auf und sind im wesentlichen frei von mechanischem Verschleiß.

Die Erfindung wird nun auf exemplarische Weise an Hand von Ausführungsbeispielen unter Bezugnahme auf die beiliegende Zeichnung näher erläutert. Es zeigen:
- Figur 1: in schematischer Darstellung ein erfindungsgemäßes Brennstoffzellensystem mit einer Vorrichtung zum Zuleiten von Brennstoff; und
- Figur 2: eine weitere Ausführungsform für eine Vorrichtung zum Zuleiten von Brennstoff.

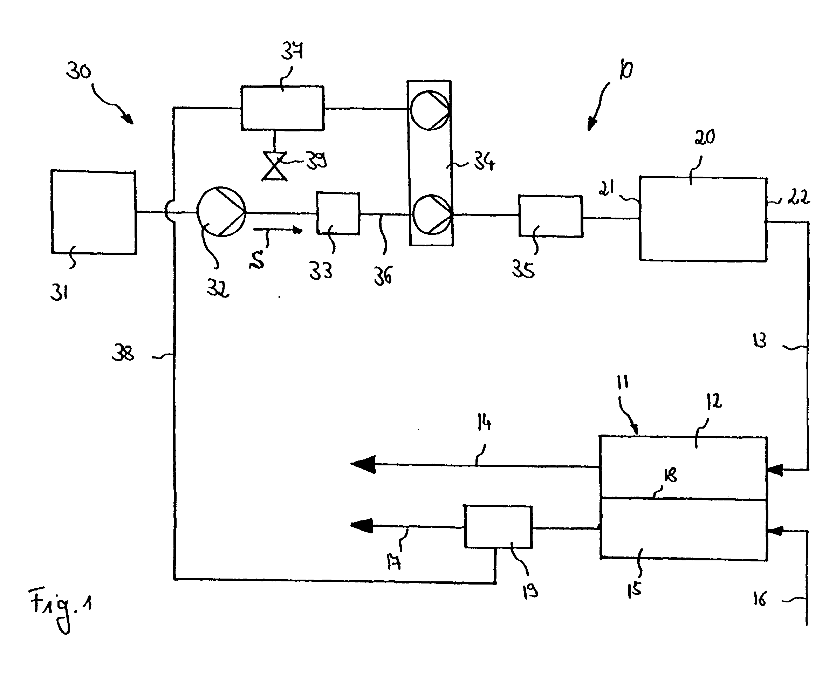

In Figur 1 ist ein Brennstoffzellensystem 10 dargestellt, das zum Betreiben eines elektrischen Antriebs in einem Fahrzeug verwendet wird.

Das Brennstoffzellensystem 10 weist eine Brennstoffzelle 11 auf mit einem Anodenteil 12, einem Kathodenteil 15 und einer Membran 18. Der Anodenteil 12 ist mit einer Zuleitung 13 und einer Ableitung 14 für einen Brennstoff, im vorliegenden Fall Wasserstoff, verbunden. Der Kathodenteil 15 ist mit einer Zuleitung 16 und einer Ableitung 17 für ein Oxidationsmittel, im vorliegenden Fall Sauerstoff oder Luft, verbunden.

Weiterhin ist eine Vorrichtung 20 zum Erzeugen/Aufbereiten des der Brennstoffzelle 11 zuzuführenden Brennstoffs vorgesehen, die über eine Anzahl von Reaktorelementen verfügt und die an ihrer Ausgangsseite 22 mit der Brennstoffzuleitung 13 verbunden ist. An ihrer Eingangsseite 21 ist die Vorrichtung 20 mit einer Vorrichtung 30 zum Zuleiten von Brennstoff verbunden.

Wie sich aus Figur 1 ergibt, weist die Vorrichtung 30 zum Zuleiten von Brennstoff zunächst einen Kraftstofftank 31 auf, in dem ein Kraftstoff, der das Ausgangsmaterial für den Brennstoff bildet, beispielsweise Methanol, Benzin, Erdgas oder dergleichen, gespeichert ist. Der Kraftstofftank 31 ist über eine Kraftstoffzuleitung 36 mit der Eingangsseite 21 der Vorrichtung 20 zum Erzeugen/Aufbereiten des Brennstoffs verbunden.

In der Kraftstoffzuleitung 36 ist zunächst eine Kraftstoffpumpe 32 vorgesehen, über die der Kraftstoff aus dem Kraftstofftank 31 herausgepumpt wird. Der Kraftstoff wird in Strömungsrichtung S durch einen Kraftstofffilter 33 hindurch in eine Doppelpumpe 34 gepumpt. Die Doppelpumpe 34 ist weiterhin mit einer Wasserzuleitung 38 verbunden, in der ein mit einem Ablassventil 39 versehener Wassertank 37 angeordnet ist. Die Wasserzuleitung 38 ist darüber hinaus mit einem Wasserabscheider 19 verbunden, der in der Oxidationsmittelableitung 17 angeordnet ist.

In der Doppelpumpe 34 wird durch eine entsprechende Mischung von Kraftstoff aus dem Kraftstofftank 31 und Wasser aus dem Wassertank 37 ein für die Vorrichtung 20 zum Erzeugen/Aufbereiten des Brennstoffs erforderliches Kraftstoff/Wassergemisch hergestellt. Dieses Kraftstoff/Wassergemisch wird in einem Zwischentank 35 zwischengespeichert, bevor es der Vorrichtung 20 zum Erzeugen/Aufbereiten des Brennstoffs zur Verfügung gestellt wird.

Nachfolgend wird nun die Funktionsweise des Brennstoffzellensystems 10 beschrieben. Während des normalen Betriebs der Brennstoffzelle 11 wird in dieser elektrischer Strom und als Nebenprodukt Wärme und Wasser in Form von Wasserdampf erzeugt. Der Wasserdampf wird beispielsweise über die Oxidationsmittelableitung 17 aus der Brennstoffzelle 11 abgeleitet. Zur Rückgewinnung des Wassers ist in der Oxidationsmittelableitung 17 der Wasserabscheider 19 vorgesehen, in dem der Wasserdampf zu flüssigem Wasser kondensiert. Das flüssige Wasser wird über die Wasserzuleitung 38 zur Doppelpumpe 34 gepumpt. Im vorliegenden Ausführungsbeispiel ist in der Wasserzuleitung 38 zusätzlich ein Wassertank 37 vorgesehen, in dem während des Brennstoffzellenprozesses erzeugtes Prozesswasser zwischengespeichert wird. Dieses Prozesswasser wird in der Doppelpumpe 34 zusammen mit aus dem Kraftstofftank 31 entnommenem Kraftstoff zu einem Kraftstoff/Wassergemisch vermischt, das anschließend im Zwischentank 35 zwischengelagert wird. Von dort wird das Kraftstoff/Wassergemisch in die Vorrichtung 20 zum Erzeugen/Aufbereiten des Brennstoffs eingeleitet, wo es für den Betrieb der Brennstoffzelle 11 in ein wasserstoffreiches Gas reformiert wird.

Insbesondere, wenn das Brennstoffzellensystem 10 in Umgebungen mit niedrigen Temperaturen, das heißt, mit Temperaturen unterhalb des Gefrierpunktes eingesetzt wird, kann die Verwendung eines Wassertanks 37 dazu führen, dass das im Wassertank 37 gespeicherte Wasser nach dem Abschalten des Brennstoffzellensystems 10 einfriert. Um ein solches Einfrieren zu vermeiden, kann auf den Wassertank 37 auch verzichtet werden. In diesem Fall müssen die Wasserzuleitung 38 und der Zwischentank 35 so groß dimensioniert werden, dass während des normalen Betriebs zur Bildung des Brennstoff/Wassergemischs immer genügend Wasser beziehungsweise eine genügend große Menge an Brennstoff/Wassergemisch zur Verfügung steht. Wenn Frostgefahr besteht, müsste auch in diesem Fall eine rechtzeitige Entleerung der Wasserzuleitung 38 sichergestellt sein. Es ist aber auch möglich, zur Umgehung dieser Schwierigkeiten nur einen sehr kleinen Wassertank 37 oder einen als Dehnungsgefäß ausgebildeten Wassertank zu verwenden, der beispielsweise in der Umgebung stark wärmeproduzierender Elemente angeordnet ist. Um zu vermeiden, dass in der Wasserzuleitung 38 und/oder im Wassertank 37 befindliches Prozesswasser einfriert, während das Brennstoffzellensystem 10 ausgeschaltet ist, ist das Ablassventil 39 vorgesehen, über das das in der Wasserzuleitung 38 und/oder dem Wassertank 37 befindliche Prozesswasser abgeleitet werden kann. Dieses Ablassventil 39 kann auch dann gesteuert betätigt werden, wenn der Zwischentank 35 gefüllt ist und das während des Brennstoffzellenprozesses kontinuierlich erzeugte Prozesswasser momentan nicht benötigt wird.

Der Zwischentank 35 hat den Zweck, dass immer genügend Kraftstoff/Wassergemisch - insbesondere während der Startphase des Brennstoffzellensystems 10 - für die Vorrichtung 20 zum Erzeugen/Aufbereiten des Brennstoffs zur Verfügung gestellt werden kann. Das Kraftstoff/Wassergemisch verbleibt auch dann im Zwischentank 35, wenn das Brennstoffzellensystem 10 ausgeschaltet ist. Auf Grund der gefrierpunktsemiedrigenden Zumischung von Brennstoff zum Wasser wird dabei verhindert, dass die im Zwischentank 35 gespeicherte Flüssigkeit bei Temperaturen unterhalb des Gefrierpunktes einfrieren kann. Wenn das Brennstoffzellensystem 10 gestartet wird, kann ohne Verzögerung Kraftstoff/Wassergemisch aus dem Zwischentank 35, der die Funktion eines Pufferspeichers innehat, in die Vorrichtung 20 eingeleitet werden, so dass der Zeitraum, bis zu dem Brennstoff für die Brennstoffzelle bereitsteht, möglichst kurz gehalten werden kann.

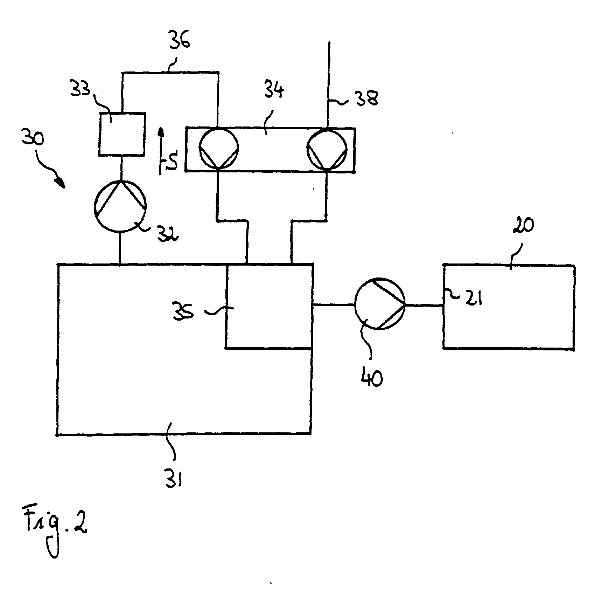

In Figur 2 ist eine weitere Ausführungsform der Vorrichtung 30 zum Zuleiten von Brennstoff dargestellt, wobei identische Bauelemente mit identischen Bezugszeichen versehen sind.

Bei dem Ausführungsbeispiel gemäß Figur 2 ist der Zwischentank 35 in den Kraftstofftank 31 integriert. Dies führt zu einer Reduzierung des erforderlichen Bauraums. Der Kraftstoff wird über die Kraftstoffpumpe 32 aus dem Kraftstofftank 31 hinausgepumpt und in Strömungsrichtung S über den Kraftstofffilter 33 in die Doppelpumpe 34 eingeleitet, wo er zusammen mit Prozesswasser, das über die Wasserzuleitung 38 zugeführt wird, zu einem Kraftstoff/Wassergemisch vermischt wird. Dieses Kraftstoff/Wassergemisch wird in den Zwischentank 35 eingespeist. Die Kraftstoffpumpe 32 kann beispielsweise auch im Kraftstofftank 31 angeordnet sein. Auch kann der Kraftstofffilter 33 beispielsweise in Strömungsrichtung nach der Pumpe 40 angeordnet sein, die den erforderlichen Druck für die Weiterleitung des Kraftstoff/Wassergemischs aus dem Zwischentank 35 in die Vorrichtung 20 zum Erzeugen/Aufbereiten des Brennstoffs erzeugt.

Sofern in der Wasserzuleitung 38 kein wie in Figur 1 dargestellter Wassertank 37 verwendet wird, müssen die Wasserzuleitung 38 und der Zwischentank 35 derart dimensioniert sein, dass während des Betriebsprozesses der Brennstoffzelle 11 eine genügende Menge an Brennstoff/Wassergemisch produziert und zwischengelagert werden kann. Die Menge des zwischengespeicherten Brennstoff/Wassergemischs muss so groß bemessen sein, dass das Brennstoffzellensystem 10 während seiner Startphase allein über dieses zwischengespeicherte Brennstoff/Wassergemisch versorgt werden kann. Wenn das Brennstoffzellensystem 10 später seine optimale Leistungsfähigkeit erreicht hat, kann der Zwischentank 35 erneut mit Brennstoff/Wassergemisch aufgefüllt werden.

Wenn in der Vorrichtung 20 zum Erzeugen/Aufbereiten des Brennstoffs beispielsweise ein Eingangsdruck des Brennstoff/Wassergemischs von mehr als 1 bar erforderlich ist, kann die Pumpe 40 dann aktiviert werden, wenn das den Zwischentank 35 verlassende Brennstoff/Wassergemisch einen Druck von ≤ 1 bar aufweist. Auf diese Weise wird gewährleistet, dass das Brennstoff/Wassergemisch der Vorrichtung 20 zum Erzeugen/Aufbereiten des Brennstoffs immer mit einem konstanten Druck zur Verfügung gestellt wird.

### Bezugszeichenliste

- 10: = Brennstoffzellensystem
- 11: = Brennstoffzelle
- 12: = Anode
- 13: = Brennstoffzuleitung
- 14: = Brennstoffableitung
- 15: = Kathode
- 16: = Oxidationsmittelzuleitung
- 17: = Oxidationsmittelableitung
- 18: = Membran
- 19: = Wasserabscheider
- 20: = Vorrichtung zum Erzeugen/Aufbereiten von Brennstoff
- 21: = Eingangsseite
- 22: = Ausgangsseite
- 30: = Vorrichtung zum Zuleiten von Brennstoff
- 31: = Kraftstofftank
- 32: = Kraftstoffpumpe
- 33: = Filter
- 34: = Doppelpumpe
- 35: = Zwischentank
- ₃₆: = Kraftstoffzuleitung
- 37: = Wassertank
- 38: = Wasserzuleitung
- 39: = Ablassventil
- 40: = Pumpe

## Patentansprüche

1. Brennstoffzellensystem, mit einer Brennstoffzelle (11), die einen Anodenteil (12) mit einer Zuleitung (13) und einer Ableitung (14) für einen Brennstoff und einen Kathodenteil (15) mit einer Zuleitung (16) und einer Ableitung (17) für ein Oxidationsmittel aufweist, und mit einer Vorrichtung (30) zur Zuleitung des Brennstoffs zur Brennstoffzelle (11) direkt oder über eine Vorrichtung (20) zum Erzeugen/Aufbereiten des Brennstoffs, die ausgangsseitig (22) mit der Brennstoffzuleitung (13) und eingangsseitig (21) mit der Vorrichtung (30) zur Zuleitung von Brennstoff verbunden ist,
**dadurch gekennzeichnet,**
**dass** die Vorrichtung (30) einen Kraftstofftank (31) aufweist, aus dem eine Kraftstoffzuleitung (36) herausführt, und eine Doppelpumpe (34) vorgesehen ist, die ebenfalls in der Kraftstoffzuleitung (36) angeordnet ist und die weiterhin mit einer Wasserzuleitung (38) verbunden ist, wobei in Strömungsrichtung (S) hinter der Doppelpumpe (34) in der Kraftstoffzuleitung (36) ein Zwischentank (35) zum Zwischenspeichem des Kraftstoff/Wassergemischs angeordnet ist.

2. Brennstoffzellensystem nach Anspruch 1,
**dadurch gekennzeichnet,**
**dass** in der Kraftstoffzuleitung (36) in Strömungsrichtung (S) vor der Doppelpumpe (34) eine weitere Pumpe (32) vorgesehen ist.

3. Brennstoffzellensystem nach einem der Ansprüche 1 bis 2,
**dadurch gekennzeichnet,**
**dass** der Zwischentank (35) in oder an dem Kraftstofftank (31) angeordnet ist.

4. Brennstoffzellensystem nach einem der Ansprüche 1 bis 3,
**dadurch gekennzeichnet,**
**dass** in der Wasserzuleitung (38) ein Wassertank (37) vorgesehen ist.

5. Brennstoffzellensystem nach einem der Ansprüche 1 bis 4,
**dadurch gekennzeichnet,**
**dass** die Wasserzuleitung (38) und/oder der Wassertank (37) ein Ablaßventil (39) aufweisen.

6. Brennstoffzellensystem nach einem der Ansprüche 1 bis 5,
**dadurch gekennzeichnet,**
**dass** in Strömungsrichtung (S) nach dem Zwischentank (35) eine weitere Pumpe (40) vorgesehen ist.

7. Brennstoffzellensystem nach einem der Ansprüche 1 - 6,
**dadurch gekennzeichnet,**
**dass** in der Brennstoffableitung (14) und/oder der Oxidationsmittelableitung (17) ein Wasserabscheider (19) vorgesehen ist, der insbesondere mit der Wasserzuleitung (38) zur Doppelpumpe (34) verbunden ist.

8. Verwendung eines Brennstoffzellensystem nach einem der Ansprüche 1 bis 7 in einem oder für ein Fahrzeug, insbesondere als Stromquelle für ein Elektrofahrzeug.

## Claims

1. Fuel cell system, having a fuel cell (11) that comprises an anode part (12) with an inlet (13) and an outlet (14) for a fuel and a cathode part (15) with an inlet (16) and an outlet (17) for an oxidant, and having a device (30) for supplying the fuel to the fuel cell (11) directly or via a device (20) for generating/preparing the fuel, which is connected at the exit end (22) to the fuel cell inlet (13) and at the entry end (21) to the device (30) for supplying the fuel,
**characterised in that** the device (30) has a fuel tank (31) out of which a fuel supply line (36) leads, and a double pump (34) is provided which is also mounted in the fuel supply line (36) and which is also connected to a water supply line (38), an intermediate tank (35) for interim storage of the fuel/water mixture being provided behind the double pump (34) in the fuel supply line (36) in the direction of flow (S).

2. Fuel cell system according to claim 1, **characterised in that** a further pump (32) is provided in the fuel supply line (36) in front of the double pump (34) in the direction of flow (S).

3. Fuel cell system according to one of claims 1 to 2, **characterised in that** the intermediate tank (35) is arranged in or on the fuel tank (31).

4. Fuel cell system according to one of claims 1 to 3, **characterised in that** a water tank (37) is provided in the water supply line (38).

5. Fuel cell system according to one of claims 1 to 4, **characterised in that** the water supply line (38) and/or the water tank (37) comprises(s) an outlet valve (39).

6. Fuel cell system according to one of claims 1 to 5, **characterised in that** a further pump (40) is provided after the intermediate tank (35) in the direction of flow (S).

7. Fuel cell system according to one of claims 1 to 6, **characterised in that** a water separator (19) is provided in the fuel outlet (14) and/or the oxidant outlet (17), said separator (19) being connected in particular to the water supply line (38) to the double pump (34).

8. Use of a fuel cell system according to one of claims 1 to 7 in or for a vehicle, particularly as a current source for an electric vehicle.

## Revendications

1. Système de piles à combustible comprenant une pile à combustible (11), qui présente une anode (12) avec une conduite d'amenée (13) et une conduite d'évacuation (14) pour un combustible et une cathode (15) avec une conduite d'amenée (16) et une conduite d'évacuation (17) pour un oxydant, et comprenant un dispositif (30) d'amenée du combustible à la pile à combustible (11) directement ou par le biais d'un dispositif (20) servant à produire/préparer le combustible qui est relié côté sortie (22) à la conduite d'amenée de combustible (13) et côté entrée (21) au dispositif (30) d'amenée de combustible,
**caractérisé en ce**
**que** le dispositif (30) présente un réservoir de carburant (31), duquel sort une conduite d'amenée de combustible (36) et qu'il est prévu une pompe double (34) qui est également agencée dans la conduite d'amenée de combustible (36) et qui continue d'être reliée à une conduite d'amenée d'eau (38), un réservoir intermédiaire (35) pour le stockage intermédiaire du mélange combustible/eau étant agencé dans le sens d'écoulement (S) derrière la pompe double (34) dans la conduite d'amenée de carburant (36).

2. Système de piles à combustible selon la revendication 1,
**caractérisé en ce**
**qu'**il est prévu une autre pompe (32) en amont de la pompe double (34) dans le sens d'écoulement (S) dans la conduite d'amenée de carburant (36).

3. Système de piles à combustible selon l'une quelconque des revendications 1 à 2,
**caractérisé en ce**
**que** le réservoir intermédiaire (35) est agencé dans le réservoir de carburant (31) ou au niveau de celui-ci.

4. Système de piles à combustible selon l'une quelconque des revendications 1 à 3,
**caractérisé en ce**
**qu'**un réservoir d'eau (37) est prévu dans la conduite d'amenée d'eau (38).

5. Système de piles à combustible selon l'une quelconque des revendications 1 à 4,
**caractérisé en ce**
**que** la conduite d'amenée d'eau (38) et/ou le réservoir d'eau (37) présentent une soupape de décharge (39).

6. Système de piles à combustible selon l'une quelconque des revendications 1 à 5,
**caractérisé en ce**
**qu'**il est prévu une autre pompe (40) en aval du réservoir intermédiaire (35) dans le sens d'écoulement (S).

7. Système de piles à combustible selon l'une quelconque des revendications 1 à 6,
**caractérisé en ce**
**qu'**il est prévu dans la conduite d'évacuation de combustible (14) et/ou la conduite d'évacuation de l'oxydant (17), un séparateur d'eau (19) qui est relié en particulier à la conduite d'amenée d'eau (38) vers la pompe double (34).

8. Utilisation d'un système de piles à combustible selon l'une quelconque des revendications 1 à 7 dans un véhicule ou pour un véhicule, en particulier comme source de courant pour un véhicule électrique.
